# EUROPEAN PATENT SPECIFICATION

(11) **EP 4 440 041 B1**
(45) Date of publication and mention of the grant of the patent: **10.06.2026**
(21) Application number: 23183979.6
(22) Date of filing: 06.07.2023
(51) Int. Cl.: H04L 9/40

(54) **DYNAMIC LOAD BALANCING OF RADIUS REQUESTS FROM NETWORK ACCESS SERVER DEVICE**
DYNAMISCHER LASTAUSGLEICH VON RADIUSANFRAGEN VON EINER NETZWERKZUGANGSSERVERVORRICHTUNG
ÉQUILIBRAGE DE CHARGE DYNAMIQUE DE DEMANDES DE RAYON PROVENANT D'UN DISPOSITIF SERVEUR D'ACCÈS AU RÉSEAU

(30) Priority: 31.03.2023 US 202318194397
(43) Date of publication of application: 02.10.2024
(73) Proprietor: Juniper Networks, Inc., Sunnyvale, CA 94089 (US)
(72) Inventor: CHEETHIRALA, Madhava Rao, Sunnyvale, 94089 (US); MANTHIRAMOORTHY, Natarajan, Sunnyvale, 94089 (US); TADIMETI, Raja Rao, Sunnyvale, 94089 (US); BASETTY, Pavan, Sunnyvale, 94089 (US); SUN, Jui-Hao, Sunnyvale, 94089 (US); DADE, Nicolas S., Sunnyvale, 94089 (US)
(74) Representative: D Young & Co LLP

(56) References cited:
- WO-A1-2016/137496
- CN-A- 110 336 823
- US-A1- 2012 281 534

## Description

### TECHNICAL FIELD

The disclosure relates generally to computer networks and, more specifically, to managing access to computer networks.

### BACKGROUND

Network access server (NAS) devices authenticate client devices (or simply "clients") and grant them access to a network. Authentication may occur via a handshake exchange between the client device, the NAS device, and an Authentication, Authorization, and Accounting (AAA) server controlling access at the NAS device. NAS devices may include wireless access points (APs), switches, routers, or any network device capable of authenticating and authorizing client devices to access an enterprise network .

For example, commercial premises or sites, such as offices, hospitals, airports, stadiums, or retail outlets, often install complex wireless network systems, including a network of wireless access points (APs), throughout the premises to provide wireless network services to one or more wireless client devices. APs are physical, electronic devices that enable other devices to wirelessly connect to a wired network using various wireless networking protocols and technologies, such as wireless local area networking protocols conforming to one or more of the IEEE 802.11 standards (i.e., "WiFi"), Bluetooth / Bluetooth Low Energy (BLE), mesh networking protocols such as ZigBee or other wireless networking technologies.

Many different types of wireless client devices, such as laptop computers, smartphones, tablets, wearable devices, appliances, and Internet of Things (IoT) devices, incorporate wireless communication technology and may be configured to connect to wireless access points when the device is in range of a compatible AP. In order to gain access to a wireless network, a wireless client device may first need to authenticate to the AP. In that case, the AP acts as a network access server (NAS) device that authenticates client devices and grants them access to the network.

WO 2016/137496 A1 relates to responsive server identification among multiple data servers linked to a shared memory. CN 110 336 823 A relates to RTT-based task allocation method, electronic equipment, TRR-based task allocation method system and medium. US 2012/281534 A1 relates to variable AAA load distribution for PDSN.

### SUMMARY

Particular aspects are set out in the appended independent claims. Various optional embodiments are set out in the dependent claims.

In general, this disclosure describes one or more techniques for load-balancing authentication requests to network access control (NAC) systems at a network access server (NAS) device based on a type of the authentication request. The NAS device may probe or ping one or more geographically distributed NAC systems to determine response latency and to receive load and status indications from the NAC systems. In accordance with the disclosed techniques, in response to receipt of an authentication request from a client device, the NAS device may select one NAC system from among the one or more NAC systems based on the load and status indications of the NAC systems and the type of authentication request received. For example, if a "local" NAC system that is in a same or similar geographic region as the NAS device is available for authentication requests (for example, is not in a failure mode nor unable to reach an Identity Provider (IDP) service) and the load at the local NAC system is below a threshold, the NAS device may send the authentication request to the local NAC system. If, however, the load at the local NAC system is above a threshold, the NAS device may perform a load balance operation to determine which of the NAC systems to send the authentication request. The NAS device may perform such load balancing based on whether the authentication request is latency tolerant or relatively latency intolerant so that authentication requests that benefit more from low latency may be sent to the lowest latency NAC system and authentication requests that may tolerate a higher latency may be sent to a higher latency NAC system. In this way, the load balancing scheme described herein may take particular advantage of other NAC systems being located in a different time zones and, thus, naturally experiencing different peak operating/load periods.

During load balancing, the NAS device may analyze the authentication requests to determine a type of the authentication request to enable application layer (L7) load balancing. For example, the NAS device may prioritize sending initial authentication requests to the lowest latency NAC system and send some or all of re-authentication requests to other NAC systems. The NAS device may also prioritize sending multi-transaction, initial authentication requests to the lowest latency NAC system and send some or all of single transaction, initial authentication requests to other NAC systems.

In one example, the disclosure is directed to a NAS device comprising a memory; and one or more processors in communication with the memory and configured to: in response to receipt of an authentication request from a client device, determine a type of the authentication request, wherein the type of the authentication request is associated with a latency tolerance; determine latency at each NAC system of a set of NAC systems in communication with the NAS device; select a NAC system of the set of NAC systems based on the latency tolerance associated with the type of the authentication request and the latency at the NAC system; and send the authentication request to the selected NAC system.

In another example, the disclosure is directed to a system comprising: a NAS device; and a set of NAC systems in communication with the NAS device, wherein the NAS device is configured to: in response to receipt of an authentication request from a client device, determine a type of the authentication request, wherein the type of the authentication request is associated with a latency tolerance; determine latency at each respective NAC system in the set of NAC systems based on the health information received from the respective NAC system; select a NAC system of the set of NAC systems based on the latency tolerance associated with the type of the authentication request and at least the latency at the NAC system included in the health information of the NAC system; and send the authentication request to the selected NAC system.

In yet another example, the disclosure is directed to a method comprising: in response to receiving an authentication request from a client device, determining, by a NAS device, a type of the authentication request, wherein the type of the authentication request is associated with a latency tolerance; determining, by the NAS device, latency at each NAC system of a set of NAC systems in communication with the NAS device; selecting, by the NAS device, a NAC system of the set of NAC systems based on the latency tolerance associated with the type of the authentication request and the latency at the NAC system; and sending, by the NAS device, the authentication request to the selected NAC system.

The details of one or more examples of the techniques of this disclosure are set forth in the accompanying drawings and the description below. Other features, objects, and advantages of the techniques will be apparent from the description and drawings, and from the claims.

### BRIEF DESCRIPTION OF DRAWINGS

FIG. 1A is a block diagram of an example network system including a network management system and network access control systems, in accordance with one or more techniques of the disclosure.
FIG. 1B is a block diagram illustrating further example details of the network system of FIG. 1A.
FIG. 2 is a block diagram of an example network access control system, in accordance with one or more techniques of this disclosure.
FIG. 3 is a block diagram of an example network management system, in accordance with one or more techniques of the disclosure.
FIG. 4 is a block diagram of an example access point device, in accordance with one or more techniques of this disclosure.
FIG. 5 is a block diagram of an example edge device, in accordance with one or more techniques of this disclosure.
FIG. 6 is a conceptual diagram illustrating an example communication flow, in accordance with one or more techniques of this disclosure.
FIG. 7 is a flow chart illustrating an example operation for the dynamic load balancing of authentication requests from a network access server device to network access control system, in accordance with one or more techniques of this disclosure.

### DETAILED DESCRIPTION

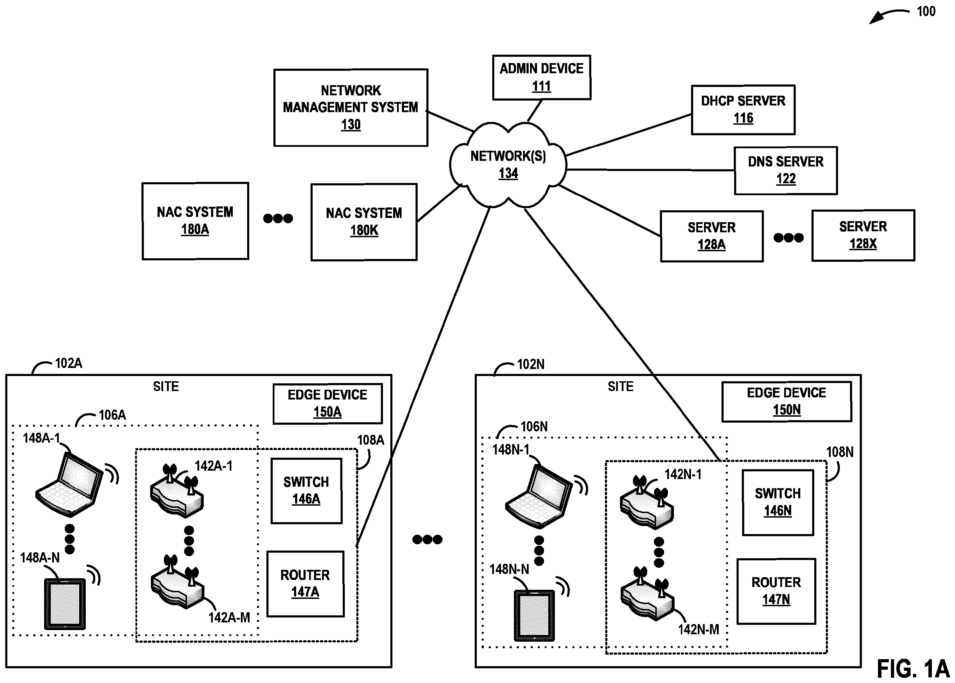

FIG. 1A is a block diagram of an example network system 100 including network access control (NAC) systems 180A-180K and network management system (NMS) 130, in accordance with one or more techniques of this disclosure. Example network system 100 includes a plurality sites 102A-102N at which a network service provider manages one or more wireless networks 106A-106N, respectively. Although in FIG. 1A each site 102A-102N is shown as including a single wireless network 106A-106N, respectively, in some examples, each site 102A-102N may include multiple wireless networks, and the disclosure is not limited in this respect.

Each site 102A-102N includes a plurality of network access server (NAS) devices 108A-108N, such as access points (APs) 142, switches 146, and routers 147. NAS devices may include any network infrastructure devices capable of authenticating and authorizing client devices to access an enterprise network. For example, site 102A includes a plurality of APs 142A-1 through 142A-M, a switch 146A, and a router 147A. Similarly, site 102N includes a plurality of APs 142N-1 through 142N-M, a switch 146N, and a router 147N. Each AP 142 may be any type of wireless access point, including, but not limited to, a commercial or enterprise AP, a router, or any other device that is connected to a wired network and is capable of providing wireless network access to client devices within the site. In some examples, each of APs 142A-1 through 142A-M at site 102A may be connected to one or both of switch 146A and router 147A. Similarly, each of APs 142N-1 through 142N-M at site 102N may be connected to one or both of switch 146N and router 147N.

Each site 102A-102N also includes a plurality of client devices, otherwise known as user equipment devices (UEs), referred to generally as UEs or client devices 148, representing various wireless-enabled devices within each site. For example, a plurality of UEs 148A-1 through 148A-K are currently located at site 102A. Similarly, a plurality of UEs 148N-1 through 148N-K are currently located at site 102N. Each UE 148 may be any type of wireless client device, including, but not limited to, a mobile device such as a smart phone, tablet or laptop computer, a personal digital assistant (PDA), a wireless terminal, a smart watch, smart ring, or other wearable device. UEs 148 may also include wired client-side devices, e.g., IoT devices such as printers, security devices, environmental sensors, or any other device connected to the wired network and configured to communicate over one or more wireless networks 106.

In order to provide wireless network services to UEs 148 and/or communicate over the wireless networks 106, APs 142 and the other wired client-side devices at sites 102 are connected, either directly or indirectly, to one or more network devices (e.g., switches, routers, gateways, or the like) via physical cables, e.g., Ethernet cables. Although illustrated in FIG. 1A as if each site 102 includes a single switch and a single router, in other examples, each site 102 may include more or fewer switches and/or routers. In addition, two or more switches at a site may be connected to each other and/or connected to two or more routers, e.g., via a mesh or partial mesh topology in a hub-and-spoke architecture. In some examples, interconnected switches 146 and routers 147 comprise wired local area networks (LANs) at sites 102 hosting wireless networks 106.

Example network system 100 also includes various networking components for providing networking services within the wired network including, as examples, NAC systems 180A-180K including or providing access to Authentication, Authorization and Accounting (AAA) servers for authenticating users and/or UEs 148, a Dynamic Host Configuration Protocol (DHCP) server 116 for dynamically assigning network addresses (e.g., IP addresses) to UEs 148 upon authentication, a Domain Name System (DNS) server 122 for resolving domain names into network addresses, a plurality of servers 128A-128X (collectively "servers 128") (e.g., web servers, databases servers, file servers and the like), and NMS 130. As shown in FIG. 1A, the various devices and systems of network 100 are coupled together via one or more network(s) 134, e.g., the Internet and/or an enterprise intranet.

In the example of FIG. 1A, NMS 130 is a cloud-based computing platform that manages wireless networks 106A-106N at one or more of sites 102A-102N. As further described herein, NMS 130 provides an integrated suite of management tools and implements various techniques of this disclosure. In general, NMS 130 may provide a cloud-based platform for wireless network data acquisition, monitoring, activity logging, reporting, predictive analytics, network anomaly identification, and alert generation. In some examples, NMS 130 outputs notifications, such as alerts, alarms, graphical indicators on dashboards, log messages, text / SMS messages, email messages, and the like, and/or recommendations regarding wireless network issues to a site or network administrator ("admin") interacting with and/or operating admin device 111. Additionally, in some examples, NMS 130 operates in response to configuration input received from the administrator interacting with and/or operating admin device 111.

The administrator and admin device 111 may comprise IT personnel and an administrator computing device associated with one or more of sites 102. Admin device 111 may be implemented as any suitable device for presenting output and/or accepting user input. For instance, admin device 111 may include a display. Admin device 111 may be a computing system, such as a mobile or non-mobile computing device operated by a user and/or by the administrator. Admin device 111 may, for example, represent a workstation, a laptop or notebook computer, a desktop computer, a tablet computer, or any other computing device that may be operated by a user and/or present a user interface in accordance with one or more aspects of the present disclosure. Admin device 111 may be physically separate from and/or in a different location than NMS 130 such that admin device 111 may communicate with NMS 130 via network 134 or other means of communication.

In some examples, one or more of NAS devices 108, e.g., APs 142, switches 146, and routers 147, may connect to edge devices 150A-150N via physical cables, e.g., Ethernet cables. Edge devices 150 comprise cloud-managed, wireless local area network (LAN) controllers. Each of edge devices 150 may comprise an on-premises device at a site 102 that is in communication with NMS 130 to extend certain microservices from NMS 130 to the on-premises NAS devices 108 while using NMS 130 and its distributed software architecture for scalable and resilient operations, management, troubleshooting, and analytics.

Each one of the network devices of network system 100, e.g., NAC systems 180, servers 116, 122 and/or 128, APs 142, switches 146, routers 147, UEs 148, edge devices 150, and any other servers or devices attached to or forming part of network system 100, may include a system log or an error log module wherein each one of these network devices records the status of the network device including normal operational status and error conditions. Throughout this disclosure, one or more of the network devices of network system 100, e.g., servers 116, 122 and/or 128, APs 142, switches 146, routers 147, and UEs 148, may be considered "third-party" network devices when owned by and/or associated with a different entity than NMS 130 such that NMS 130 does not directly receive, collect, or otherwise have access to the recorded status and other data of the third-party network devices. In some examples, edge devices 150 may provide a proxy through which the recorded status and other data of the third-party network devices may be reported to NMS 130.

In the example of FIG. 1A, each of NAC systems 180 comprises a cloud-based network access control service at multiple, geographically distributed points of presence. Typically, network access control functionality is offered by on-premises appliances that are limited by processing power and memory as well as maintenance and upgrade issues. Offering cloud-based network access control services avoids the limitations and improves network administration. A centralized, cloud-based deployment of network access control, however, introduces issues with latency and failures that may block client devices from network access.

In accordance with the disclosed techniques, NAC systems 180 provide multiple points of presence or NAC clouds at several geographic regions. NMS 130 is configured to manage NAC configuration, including access policies for enterprise networks, and push the appropriate NAC configuration data or files to the respective NAC clouds 180A-180K. In this way, NAC systems 180 provide the same benefits as a centralized, cloud-based network access control service with lower latency and high availability.

NAC systems 180 provide a way of authenticating client devices 148 to access wireless networks 106, such as branch or campus enterprise networks. NAC systems 180 may each include or provide access to an Authentication, Authorization, and Accounting (AAA) server, e.g., a RADIUS server, to authenticate client devices 148 prior to providing access to the enterprise network via the NAS devices 108. In some examples, NAC systems 180 may enable certificate-based authentication of client devices or enable interaction with cloud directory services to authenticate the client devices.

NAC systems 180 may identify client devices 148 and provide client devices 148 with the appropriate authorizations or access policies based on their identities, e.g., by assigning the client devices to certain virtual local area networks (VLANs), applying certain access control lists (ACLs), directing the client devices to certain registration portals, or the like. NAC systems 180 may identify client devices 148 by analyzing network behavior of the client devices, referred to as fingerprinting. Identification of client devices may be performed based on media access control (MAC) addresses, DHCP options used to request IP addresses, link layer discovery protocol (LLDP) packets, user agent information, and/or device type and operating system information.

Client devices 148 may include multiple different categories of devices with respect to a given enterprise, such as trusted enterprise devices, bring-your-own-device (BYOD) devices, IoT devices, and guest devices. NAC system 180 may be configured to subject each of the different categories of devices to different types of tracking, different types of authorization, and different levels of access privileges. In some examples, after a client device gains access to the enterprise network, NAC systems 180 may monitor activities of the client device to identify security concerns and, in response, re-assign the client device to a quarantine VLAN or another less privileged VLAN to restrict access of the client device.

NMS 130 is configured to operate according to an artificial intelligence / machine-learning-based computing platform providing comprehensive automation, insight, and assurance (WiFi Assurance, Wired Assurance and WAN assurance) spanning from "client," e.g., client devices 148 connected to wireless networks 106 and wired local area networks (LANs) at sites 102 to "cloud," e.g., cloud-based application services that may be hosted by computing resources within data centers.

As described herein, NMS 130 provides an integrated suite of management tools and implements various techniques of this disclosure. In general, NMS 130 may provide a cloud-based platform for wireless network data acquisition, monitoring, activity logging, reporting, predictive analytics, network anomaly identification, and alert generation. For example, NMS 130 may be configured to proactively monitor and adaptively configure network 100 so as to provide self-driving capabilities.

In some examples, AI-driven NMS 130 also provides configuration management, monitoring and automated oversight of software defined wide-area networks (SD-WANs), which operate as an intermediate network communicatively coupling wireless networks 106 and wired LANs at sites 102 to data centers and application services. In general, SD-WANs provide seamless, secure, traffic-engineered connectivity between "spoke" routers (e.g., routers 147) of the wired LANs hosting wireless networks 106, such as branch or campus enterprise networks, to "hub" routers further up the cloud stack toward the cloud-based application services. SD-WANs often operate and manage an overlay network on an underlying physical Wide-Area Network (WAN), which provides connectivity to geographically separate customer networks. In other words, SD-WANs extend Software-Defined Networking (SDN) capabilities to a WAN and allow network(s) to decouple underlying physical network infrastructure from virtualized network infrastructure and applications such that the networks may be configured and managed in a flexible and scalable manner.

In some examples, AI-driven NMS 130 may enable intent-based configuration and management of network system 100, including enabling construction, presentation, and execution of intent-driven workflows for configuring and managing devices associated with wireless networks 106, wired LAN networks, and /or SD-WANs. For example, declarative requirements express a desired configuration of network components without specifying an exact native device configuration and control flow. By utilizing declarative requirements, what should be accomplished may be specified rather than how it should be accomplished. Declarative requirements may be contrasted with imperative instructions that describe the exact device configuration syntax and control flow to achieve the configuration. By utilizing declarative requirements rather than imperative instructions, a user and/or user system is relieved of the burden of determining the exact device configurations required to achieve a desired result of the user/system. For example, it is often difficult and burdensome to specify and manage exact imperative instructions to configure each device of a network when various different types of devices from different vendors are utilized. The types and kinds of devices of the network may dynamically change as new devices are added and device failures occur. Managing various different types of devices from different vendors with different configuration protocols, syntax, and software versions to configure a cohesive network of devices is often difficult to achieve. Thus, by only requiring a user/system to specify declarative requirements that specify a desired result applicable across various different types of devices, management and configuration of the network devices becomes more efficient. Further example details and techniques of an intent-based network management system are described in U.S. Patent No. 10,756,983, entitled "Intent-based Analytics," and U.S. Patent No. 10,992,543, entitled "Automatically generating an intent-based network model of an existing computer network".

Although the techniques of the present disclosure are described in this example as performed by NAC systems 180 and/or NMS 130, techniques described herein may be performed by any other computing device(s), system(s), and/or server(s), and that the disclosure is not limited in this respect. For example, one or more computing device(s) configured to execute the functionality of the techniques of this disclosure may reside in a dedicated server or be included in any other server in addition to or other than NAC systems 180 or NMS 130, or may be distributed throughout network 100, and may or may not form a part of NAS systems 180 or NMS 130

Network access server (NAS) device 108A may load-balance authentication requests to network access control (NAC) systems 180A-K based on a type of the authentication request. NAS device 108A may probe or ping one or more geographically distributed NAC systems 180A-K to determine response latency and to receive load and status indications from the NAC systems 180A-K. In accordance with the disclosed techniques, in response to receipt of an authentication request from a client device, the NAS device 108A may select one NAC system from among the one or more NAC systems 180A-K based on the load and status indications of NAC systems 180A-K and the type of authentication request received. For example, if a "local" NAC system 180A that is in a same or similar geographic region as the NAS device 108A is available for authentication requests (for example, is not in a failure mode nor unable to reach an Identity Provider (IDP) service) and the load at the local NAC system 180A is below a threshold, NAS device 108A may send the authentication request to local NAC system 180A. If, however, the load at the local NAC system 180A is above a threshold, the NAS device 108A may perform a load balance operation to determine which of NAC systems 108A-K to send the authentication request. The NAS device 108A may perform such load balancing based on whether the authentication request is latency tolerant or relatively latency intolerant so that authentication requests that benefit more from low latency may be sent to the lowest latency NAC system and authentication requests that may tolerate a higher latency may be sent to a higher latency NAC system. In this way, the load balancing scheme described herein may take particular advantage of other NAC systems being located in a different time zones and, thus, naturally experiencing different peak operating/load periods.

During load balancing, NAS device 108A may analyze the authentication requests to determine a type of the authentication request to enable application layer (L7) load balancing. For example, NAS device 108A may prioritize sending initial authentication requests to the lowest latency NAC system and send some or all of re-authentication requests to other NAC systems. The NAS device may also prioritize sending multi-transaction, initial authentication requests to the lowest latency NAC system and send some or all of single transaction, initial authentication requests to other NAC systems. Such load balancing of authentication requests to NAC systems 180 provides low latency service to latency sensitive authentication requests, such as initial authentication requests during times of high utilization of NAC systems 180 and may improve the functioning of client devices 148 since client devices 148 are able to be authenticated and access the network quicker resulting in better performance of client devices 148 and an improved user experience.

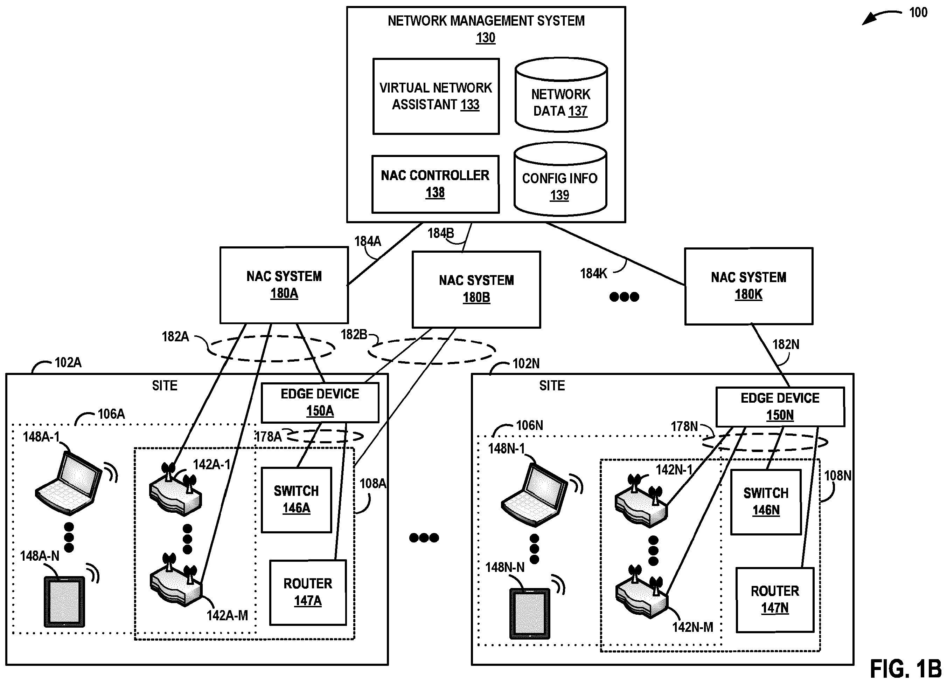

FIG. 1B is a block diagram illustrating further example details of the network system of FIG. 1A. In this example, FIG. 1B illustrates logical connections 178A-178N, 182A-182N, and 184A-184K, between NAS devices 108 at sites 102, NAC systems 180, and NMS 130. In addition, FIG. 1B illustrates NMS 130 configured to operate according to an AI-based computing platform to provide configuration and management of one or more of NAC systems 180 and NAS devices 108 at sites 102 via the logical connections.

In operation, NMS 130 observes, collects and/or receives network data 137, which may take the form of data extracted from messages, counters, and statistics, for example, from one or more of APs 142, switches 146, routers 147, edge devices 150, NAC systems 180, and/or other nodes within network 134. NMS 130 provides a management plane for network 100, including management of enterprise-specific configuration information 139 for one or more of NAS devices 108 at sites 102 and NAC systems 180. Each of the one or more NAS devices 108 and each of NAC systems 180 may have a secure connection with NMS 130, e.g., a RadSec (RADIUS over Transport Layer Security (TLS)) tunnel or another encrypted tunnel. Each of the NAS devices 108 and NAC systems 180 may download the appropriate enterprise-specific configuration information 139 from NMS 130 and enforce the configuration. In some scenarios, one or more of the NAS devices 108 may be a third-party device or otherwise not support establishment of a secure connection directly with NMS 130. In these scenarios, edge devices 150 may provide proxies through which the NAS devices 108 may connect to NMS 130.

In accordance with one specific implementation, a computing device is part of NMS 130. In accordance with other implementations, NMS 130 may comprise one or more computing devices, dedicated servers, virtual machines, containers, services, or other forms of environments for performing the techniques described herein. Similarly, computational resources and components implementing VNA 133 may be part of the NMS 130, may execute on other servers or execution environments, or may be distributed to nodes within network 134 (e.g., routers, switches, controllers, gateways, and the like).

In some examples, NMS 130 monitors network data 137, e.g., one or more service level expectation (SLE) metrics, received from each site 102A-102N, and manages network resources, such as the one or more of APs 142, switches 146, routers 147, and edge devices 150 at each site, to deliver a high-quality wireless experience to end users, IoT devices and clients at the site. In other examples, NMS 130 monitors network data 137 received from NAC systems 180 and manages enterprise-specific configuration information 139 for NAC systems 180 to enable unconstrained network access control services for client devices 148 at sites 102 with low latency and high availability.

As illustrated in FIG. 1B, NMS 130 may include a virtual network assistant (VNA) 133 that implements an event processing platform for providing real-time insights and simplified troubleshooting for IT operations, and that automatically takes corrective action or provides recommendations to proactively address network issues. VNA 133 may, for example, include an event processing platform configured to process hundreds or thousands of concurrent streams of network data 137 from sensors and/or agents associated with APs 142, switches 146, routers 147, edge devices 150, NAC systems 180, and/or other nodes within network 134. For example, VNA 133 of NMS 130 may include an underlying analytics and network error identification engine and alerting system in accordance with various examples described herein. The underlying analytics engine of VNA 133 may apply historical data and models to the inbound event streams to compute assertions, such as identified anomalies or predicted occurrences of events constituting network error conditions. Further, VNA 133 may provide real-time alerting and reporting to notify a site or network administrator via admin device 111 of any predicted events, anomalies, trends, and may perform root cause analysis and automated or assisted error remediation. In some examples, VNA 133 of NMS 130 may apply machine learning techniques to identify the root cause of error conditions detected or predicted from the streams of network data 137. If the root cause may be automatically resolved, VNA 133 may invoke one or more corrective actions to correct the root cause of the error condition, thus automatically improving the underlying SLE metrics and also automatically improving the user experience.

Further example details of operations implemented by the VNA 133 of NMS 130 are described in U.S. Patent No. 9,832,082, issued November 28, 2017, and entitled "Monitoring Wireless Access Point Events," U.S. Publication No. US 2021/0306201, published September 30, 2021, and entitled "Network System Fault Resolution Using a Machine Learning Model," U.S. Patent No. 10,985,969, issued April 20, 2021, and entitled "Systems and Methods for a Virtual Network Assistant," U.S. Patent No. 10,958,585, issued March 23, 2021, and entitled "Methods and Apparatus for Facilitating Fault Detection and/or Predictive Fault Detection," U.S. Patent No. 10,958,537, issued March 23, 2021, and entitled "Method for Spatio-Temporal Modeling," and U.S. Patent No. 10,862,742, issued December 8, 2020, and entitled "Method for Conveying AP Error Codes Over BLE Advertisements".

In addition, as illustrated in FIG. 1B, NMS 130 may include a NAC controller 138 that implements a NAC configuration platform that provides a user interface to create and assign access policies for client devices 148 of enterprise networks 106, and provides the appropriate enterprise-specific configuration information 139 to the respective NAC clouds 180A-180K. NMS 130 may have a secure connection 184A-184K, e.g., a RadSec tunnel or another encrypted tunnel, with each of NAC systems 180A-180K, respectively. Through secure connections 184, NAC controller 136 may receive network data 137, e.g., NAC event data, from each of NAC systems 180 and each of NAC systems 180 may download the appropriate configuration information 139 from NMS 130. In some examples, NAC controller 138 may log or map which enterprise networks are served by which of NAC systems 180. In addition, NAC controller 138 may monitor NAC systems 180 to identify failures of primary NAC systems and manage failovers to standby NAC systems.

NAC systems 180 provide network access control services in a control plane for one or more of NAS devices 108 at sites 102. In operation, NAC systems 180 authenticate client devices 148 to access enterprise wireless networks 106 and may perform fingerprinting to identify the client devices 148 and apply authorizations or access polices to the client devices 148 based on the identities. NAC systems 180 include multiple, geographically distributed points of presence. For example, NAC system 180A may comprise a first cloud-based system positioned within a first geographic region, e.g., U.S. East, NAC system 180B (not shown) may comprise a second cloud-based system positioned within a second geographic region, e.g., U.S. West, and NAC system 180K may comprise a k^{th} cloud-based system positioned within a k^{th} geographic region, e.g., China.

Deploying multiple NAC clouds at several geographic regions enables network access control services to be offered to nearby NAS devices with lower latency and high availability, while avoiding the processing limitations and maintenance issues experienced by on-premises NAC appliances. For example, NAS devices 108A within enterprise network site 102A may connect to the physically closest one of NAC systems, i.e., NAC system 180A, to experience lower latency for network access control services. In some examples, the physically closest one of NAC systems 180 may comprise a primary NAC system, and the NAS devices may also connect to one or more other NAC systems of NAC systems 180 as standby NAC systems in case of a failure of the primary NAC system. For example, NAS devices 108A within enterprise network site 102A may connect to both NAC system 180A and NAC system 180B to experience high availability of network access control services.

In the example illustrated in FIG. 1B, each of the NAS devices 108, directly or indirectly, has a secure connection with at least one of NAC systems 180. For example, each of APs 142A within site 120A has a direct, secure connection 182A to NAC system 180A, e.g., a RadSec tunnel or another encrypted tunnel. Each of switch 146A and router 147A within site 120A has an indirect connection to NAC system 180A via edge device 150A. In this example, switch 146A and router 147A may not support establishment of a secure connection directly with NAC system 180A, but edge device 150A may provide a proxy through which switch 146A and router 147A may connect to NAC system 180A. For example, each of switch 146A and router 147A have a direct connection 178A, e.g., a RADIUS tunnel, to edge device 150A, and edge device 150A has a direct, secure connection 182A to NAC system 180A. Similarly, for site 102N, each of NAS devices 108N has an indirect connection to NAC system 180K via edge device 150N. In this example, APs 142N, switch 142N, and router 147N may not support establishment of a secure connection directly with NAC system 180K, but edge device 150N may provide a proxy through which NAS devices 108N may connect to NAC system 180K. For example, each of APs 142N, switch 146N, and router 147N have a direct connection 178N, e.g., a RADIUS tunnel, to edge device 150N, and edge device 150N has a direct, secure connection 182N to NAC system 180K.

Through secure connections 182, NAC systems 180 may receive network access requests from client devices 148 through NAS devices 108 (and in some cases edge devices 150) at nearby enterprise sites 102. In response to the network access requests, NAC systems 180 authenticate the requesting client devices using an AAA server. NAC system 180 may perform fingerprinting to identify the authenticated client devices. NAC systems 180 then enforce the appropriate access policies on the identities of the authenticated client devices per the enterprise-specific configuration information 139 downloaded from NMS 130. In accordance with one specific implementation, a computing device is part of each of NAC systems 180. In accordance with other implementations, each of NAC systems 180A-180K may comprise one or more computing devices, dedicated servers, virtual machines, containers, services, or other forms of environments for performing the techniques described herein.

In accordance with one or more techniques of this disclosure, NAS devices 108 may load balance authentication requests to NAC systems 180A-180K based on types of the authentication requests. NAS devices 108 may probe or ping one or more geographically distributed NAC systems 180A-180K to determine response latency and to receive load and status indications from the NAC systems. In accordance with the disclosed techniques, in response to receipt of an authentication request from a client device, NAS devices 108 may select one NAC system from among NAC systems 180A-180K based on the load and status indications of NAC systems 180A-180K and the type of authentication request received.

Since client device admission is a critical task in an enterprise, often multiple NAC systems 180 may be configured as primary and/or secondary servers for NAS devices 108. NMS 130 may provide a configuration list of appropriate NAC systems 180A-180K to the NAS devices 108. NAS devices 108 may use the configuration list for active load balancing or for fallback based on the configuration.

Different NAS devices 108 will have different latencies for a given NAC system and a given NAS device will have different latencies with different NAC systems due to factors such as geographic location. Thus, load balancing based on latency tolerance of authorization requests may provide advantages for latency sensitive authorization requests.

NAS devices 108 may probe NAC systems 180A-180K to test the connectivity, availability, and latency of NAC systems 180A-180K. For example, NAS devices 108 may periodically send probe messages to the NAC systems 180A-180K. NAS devices 108 may probe NAC systems 180A-180K using the RADIUS protocol. The probe messages may include requests for load and status indications from the NAC systems. NAS devices 108 may send the probe messages according to a configurable schedule, In one example, the configurable schedule may have a default value, such as once a minute.

NAC systems 180A-180K may respond to the probe messages with load and status indications from the NAC systems. The load indications may indicate the load, such as a percentage of capacity, at NAC systems 180A-180K. The status indications may indicate server status such as lack of connection to identity provider (IDP) or other failure conditions. An identity provider (IDP) is a service that stores and verifies user identity. IDPs often work with single sign-on (SSO) providers to authenticate users. The identity information may include details such as username, email address, and other attributes associated with the user's identity.

NAC system 180 may send status indications (for example in response to probes from NAS devices 108) to the NAS devices 108. NAS devices 108 may use the status indications to determine whether NAC system 180 may be sent or is a candidate to be sent authentication requests. In one example, the status indications sent by NAC system 180 may include:
IDP reachable: Yes/No (indicates whether NAC system 180 may connect to its associated IDP)
IDP Outstanding requests exceed threshold: Yes/No (indicates whether the outstanding requests at the associated IDP for NAC system 180 exceeds a threshold and thus NAC system 180 should not be used )
NAC Internal Microservice quality degraded: Yes/No (indicates whether the NAC system 180 is unable to internally handle authentication requests and should not be used. For example, whether a Radius to Policy connection is slower than usual and thus NAC system 180 should not be used.)

NAC systems 180A-180K may respond to the probe messages with responses including load and status indications. The load and status indications may be vendor-specific attributes (VSA) for RADIUS based on vendors of the NAS devices 108 from which the probe messages were received. VSAs are typically defined by remote-access server vendors, usually hardware vendors, to customize how RADIUS works on their servers. NAC systems 180A-180K may collect and store the load and status indications as defined by the remote-access server vendors and then provide these values in responses back to the NAS devices 108. RADIUS attributes are carried as part of standard RADIUS request and response messages. Alternately, NMS 130 may poll NAC systems 180A-180K and provide status indications including VSAs concerning NAC systems 180A-180K to the NAS devices 108.

NAS devices 108 may analyze the responses to the probe messages to determine the availability and load at NAC systems 180A-180K. For example, in response to a lack of reply to a probe message, a status indicating a lack of connection to identity provider (IDP), or other failure conditions, the NAS devices 108 may determine that one or more of NAC systems 180A-180K are unavailable available to receive authentication requests.

NAS devices 108 may also monitor the load at NAC systems 180A-180 based on the load indications in the responses from NAC systems 180A-180. NAS devices 108 may determine and store the time between sending the probe message and the receipt of the response from each of NAC systems 180A-180K as an indication of the latency of each of NAC systems 180A-180K. In this way, NAS devices 108 may determine a lowest latency NAC system with respect to a given NAS device. NAS devices 108 may also determine the load at a NAC system using success-to-timeout-failure ratios, dummy health checks, and/or number-of-outstanding-requests.

NAS devices 108 may receive authentication requests from client devices and send these authentication requests to one of NAC systems 180A-180K. NAC systems will often have differing loads. For example, due to time zone differences, a NAC system on the west coast of the US will have peak hours for authentication requests that are later than a NAC system on the east coast of the US.

While the local NAC system has a relatively low load, NAS devices 108 may send all authentication requests to the local NAC system. The local NAC system may be the default NAC system for a particular NAS device. The local NAC system may be the NAC system assigned to each NAS device by NMS 130 and/or the lowest latency NAC system for each NAS device. When the local NAC system has a relatively high load, NAS devices 108 may load balance as described below. NAS devices 108 may use a threshold such as a given percentage of max capacity (e.g., 70% of max capacity) to distinguish between low and high loads at the local NAC system.

NAS devices 108 may in response to receipt of an authentication request from a client device, determine a type of the authentication request, wherein the type of the authentication request is associated with a latency tolerance. Latency tolerance may be different for different types of authentication requests. NAS devices 108 associate an initial authentication request with a low tolerance for latency, and associate a re-authentication request with a high tolerance for latency. Initial authentication requests have a low latency tolerance since client devices may be blocked from accessing a network until the initial authentication request from that client device is accepted. Significant latency for initial authentication requests may thus be noticed by users of the client devices, especially for multi-transaction authentication discussed below. Re-authentication requests may occur while the client device is already connected to the network so latency in re-authentication requests may not be as noticeable by users of the client devices.

NAS devices 108 may determine whether an authentication request is an initial or re-authentication request by examining the authentication requests. For example, NAS devices 108 may monitor which client devices are already connected to the network and consider authentication requests from these client devices as re-authentication requests.

NAS devices 108 may also associate a single transaction authentication with a high tolerance for latency and a multi-transaction authentication with a low tolerance for latency. Multi-transaction authentications have a lower latency tolerance because of the multiple transactions required to complete authentication of a client device. Thus, any difference in latency between NAC systems 180 for a single transaction will be effectively multiplied in a multi-transaction authentication. Examples of multi-transaction authentication include Extensible Authentication Protocols (EAP). The Extensible Authentication Protocol (EAP) is an architectural framework that provides extensibility for authentication methods for commonly used protected network access technologies, such as IEEE 802.1X-based wired or wireless access (often called dot1x). Examples of single transaction authentication include Password Authentication Protocol (PAP) and MAC Authentication Bypass (MAB). PAP is a password-based authentication protocol used by Point-to-Point Protocol (PPP) to validate users. MAB is a protocol that allows a device to bypass the standard 802.1X authentication process and instead use the device's Media Access Control (MAC) address for authentication. MAB is typically used for devices that are not capable of supporting the full 802.1X authentication process, such as printers or some phones.

NAS devices 108 may determine whether an authentication request is part of a multi-transaction authentication or a single transaction authentication by examining the authentication requests. For example, NAS devices 108 may examine the authentication requests to determine the authorization protocol, such as EAP, PAP, and MAB, used by the authorization request and thus categorize the authorization request as single transaction authentication or multi-transaction authentication.

NAS devices 108 may determine latency at each NAC system of the set of NAC systems 180 in communication with the NAS device. For example, the response time for probe messages and/or for previous authentication requests may be used as an indication of the latency. NAS devices 108 may calculate a moving average or other statistic to smooth the latency values. Typically, a geographically close local NAC system will have the lowest latency, but that need not be the case. NAS devices 108 may select a NAC system of the set of NAC systems based on the latency tolerance associated with the type of the authentication request and the latency at the NAC system. Then, NAS devices 108 may send the authentication request to the selected NAC system.

As discussed above, NAS devices 108 may monitor the latency for each of NAC systems 180A-180K. If more than one NAC system is available and the local NAC system has a relatively high load, NAS devices 108 may determine how to load balance the authentication requests between the available NAC systems based on the type of the authentication request.

In one example, NAS devices 108 send re-authentication requests and initial authentication requests that are single transaction requests to a higher latency NAC system. In this example, NAS devices 108 send initial authentication requests that are multiple transaction to the lower latency NAC system. In another example, NAS devices 108 send re-authentication requests to a higher latency NAC system and send initial authentication requests to the lower latency NAC system.
When the lowest latency NAC system has a high load and there is more than one available other NAC systems with low load to send the less latency sensitive authentication requests to, the NAS system may send the less latency sensitive authentication requests to the available NAC system with the lowest latency.

The techniques of this disclosure provide one or more technical advantages and practical applications. For example, the techniques enable load balancing of authentication requests to NAC systems 180 in a manner that may still service latency sensitive authentication requests, such as initial authentication requests, with low latency NAC service during times of high utilization of NAC systems 180. Such load balancing may improve the functioning of client devices 148 since client devices 148 are able to be authenticated and access the network quicker resulting in better performance of client devices 148 and improved user experience. Load balancing schemes that do not examine the authentication requests to determine whether they are latency tolerant do not have these advantages and may thus reduce the performance of client devices 148 that make latency sensitive authentication requests. The techniques of this disclosure may also save resources and expense since they may reduce the need to expand the capacity of NAC systems 180 during periods of high utilization of NAC systems 180.

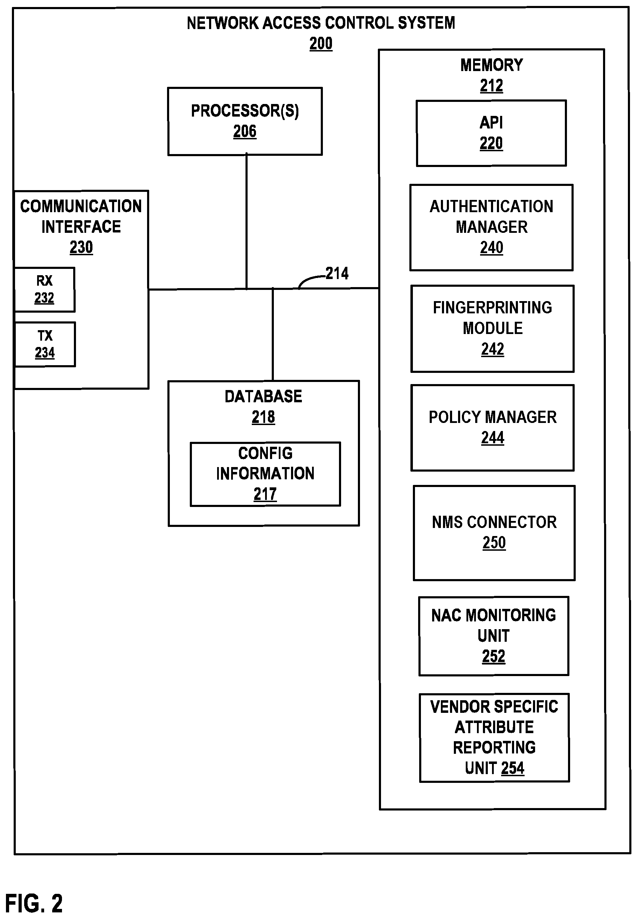

FIG. 2 is a block diagram of an example network access control (NAC) system 200, in accordance with one or more techniques of the disclosure. NAC system 200 may be used to implement, for example, any of NAC systems 180 in FIGS. 1A, 1B. In such examples, NAC system 200 is responsible for authenticating and authorizing one or more client devices 148 to access enterprise wireless networks 106 at a sub-set of nearby enterprise sites 102A-102N.

NAC system 200 includes a communications interface 230, one or more processor(s) 206, a user interface 210, a memory 212, and a database 218. The various elements are coupled together via a bus 214 over which the various elements may exchange data and information. In some examples, NAC system 200 receives network access requests from one or more of client devices 148 through NAS devices 108 (and in some cases edge devices 150) at the sub-set of nearby enterprise sites 102 from FIGS. 1A, 1B. In response to the network access requests, NAC system 200 authenticates the requesting client devices. In some examples, NAC system 200 enforces appropriate access policies on the authenticated client devices in accordance with enterprise-specific configuration information 217 downloaded from NMS 130 from FIGS. 1A, 1B. In some examples, NAC system 200 may be part of another server shown in FIGS. 1A, 1B or a part of any other server.

Processor(s) 206 execute software instructions, such as those used to define a software or computer program, stored to a computer-readable storage medium (such as memory 212), such as non-transitory computer-readable mediums including a storage device (e.g., a disk drive, or an optical drive) or a memory (such as Flash memory or RAM) or any other type of volatile or non-volatile memory, that stores instructions to cause the one or more processors 306 to perform the techniques described herein. Such instructions may be received for execution and/or for storage (ready for later execution) using one or more communications interfaces.

Communications interface 230 may include, for example, an Ethernet interface. Communications interface 230 couples NAC system 200 to a network and/or the Internet, such as any of network 134 as shown in FIG. 1A and/or any local area networks. Communications interface 230 includes a receiver 232 and a transmitter 234 by which NAC system 200 receives/transmits data and information to/from any of APs 142, switches 146, routers 147, edge devices 150, NMS 130, or servers 116, 122, 128 and/or any other network nodes, devices, or systems forming part of network system 100 such as shown in FIGS. 1A, 1B.

The data and information received by NAC system 200 may include, for example, configuration information 217 associated with one or more of enterprise sites 102 that is downloaded from NMS 130. Configuration information 217 may include enterprise-specific NAC configuration information, including access policies and associated policy assignment criteria. For example, configuration information 217 may define certain virtual local area networks (VLANs), access control lists (ACLs), registration portals, or the like, associated with certain categories of client devices. Configuration information 217 may further define, for each of the different categories of the client devices, different types of tracking, different types of authorization, and/or different levels of access privileges. In addition, the data and information received by NAC system 200 may include identification information of client devices 148 from NAS devices 108 that is used by NAC system 200 to perform fingerprinting of the end user devices in order to enforce the access policies as defined in configuration information 217. NAC system 200 may further transmit data and information via communications interface 330 to NMS 130 including, for example, NAC event data, which may be used by NMS 130 to remotely monitor the performance of NAC system 200.

Memory 212 includes one or more devices configured to store programming modules and/or data associated with operation of NAC system 200. For example, memory 212 may include a computer-readable storage medium, such as a non-transitory computer-readable medium including a storage device (e.g., a disk drive, or an optical drive) or a memory (such as Flash memory or RAM) or any other type of volatile or non-volatile memory, that stores instructions to cause the one or more processor(s) 206 to perform the techniques described herein.

In this example, memory 212 includes an API 220, an authentication manager 240, a fingerprinting module 242, a policy manager 244, NMS connector 250, a NAC monitoring unit 252 and a vendor-specific attribute reporting unit 254. NAC system 200 may also include any other programmed modules, software engines and/or interfaces configured for authentication and authorization of client devices 148.

Authentication manager 240 enables authentication of client devices 148 at NAS devices 108 to access wireless networks 106, such as branch or campus enterprise networks, at the sub-set of enterprise sites 102 in communication with NAC system 200. Authentication manager 240 may perform the functionality of an AAA server, e.g., a RADIUS server, or provide access to an AAA server to authenticate client devices 148 prior to providing access to the enterprise networks 106 via the NAS devices 108. In some examples, authentication manager 240 may participate in a handshake exchange between a client device, an NAS device, and NAC system 200 controlling access at the NAS device. In other examples, authentication manager 240 may enable certificate-based authentication of client devices or enable interaction with cloud directory services to authenticate the client devices.

Fingerprinting module 242 enables identification of client devices 148 used to provide the client devices with appropriate authorizations or access policies based on their identities or categorizations. Fingerprinting module 242 may identify client devices 148 by analyzing network behavior of the client devices. Fingerprinting module 242 may receive the network behavior data of the client devices from the NAS devices 108 and/or edge devices 150 in communication with NAC system 200. For example, fingerprinting module 242 may perform fingerprinting of client devices 148 based on one or more of MAC addresses, DHCP options used to request IP addresses, LLDP packets, user agent information, and/or device type and operating system information.

Policy manager 244 enables enforcement of the authorizations or access policies based on the identities or categorizations of the authenticated client devices. For example, policy manager 244 may assign the authenticated client devices to certain VLANs, apply certain ACLs, direct the client devices to certain registration portals, or the like, that are each associated with different types of tracking, different types of authorization, and/or different levels of access privileges in accordance with configuration information 217 for the corresponding enterprise of the client devices. In some examples, after a client device gains access to the enterprise network, policy manger 244 may monitor activities of the client device to identify security concerns and, in response, re-assign the client device to a quarantine VLAN or another less privileged VLAN to restrict access of the client device.

NMS connector 250 manages the data and information exchanged between NAC system 200 and NMS 130, e.g., via a RadSec tunnel or another encrypted tunnel 184, as shown in FIG. 1B. NMS connector 250 may maintain a log or mapping of which enterprise networks are served by NAC system 200 and the corresponding configuration information 217 for those enterprises. NMS connector 250 may also manage any updates or modifications to configuration information 217 received from NMS 130.

In accordance with one or more techniques of this disclosure, NAC monitoring unit 252 may monitor and store statistics of NAC system 200. For example, NAC monitoring unit 252 may monitor load at NAC system 200 such as a percentage of max capacity. For example, a load percentage may refer to the percentage of the total processing power at processor 206 of NAC system 200 that is being used. The percentage of processor utilization may be calculated by dividing the amount of time processor 206 is processing requests by the total time in the same period. Alternately the load may be a more complex statistic that combines multiple utilization features such as processor utilization, job queue length, memory usage, disk I/O, and/or network bandwidth.

NAC monitoring unit 252 may also monitor and store failure statuses such as lack of connection to an identity provider (IDP) and other failure conditions. For example, NAC monitoring unit 252 may check connections to the IDP, such as with probe messages, or monitor failure logs to determine lack of connection to the IDP. NAC monitoring unit 252 may do such failure checking as a background process.

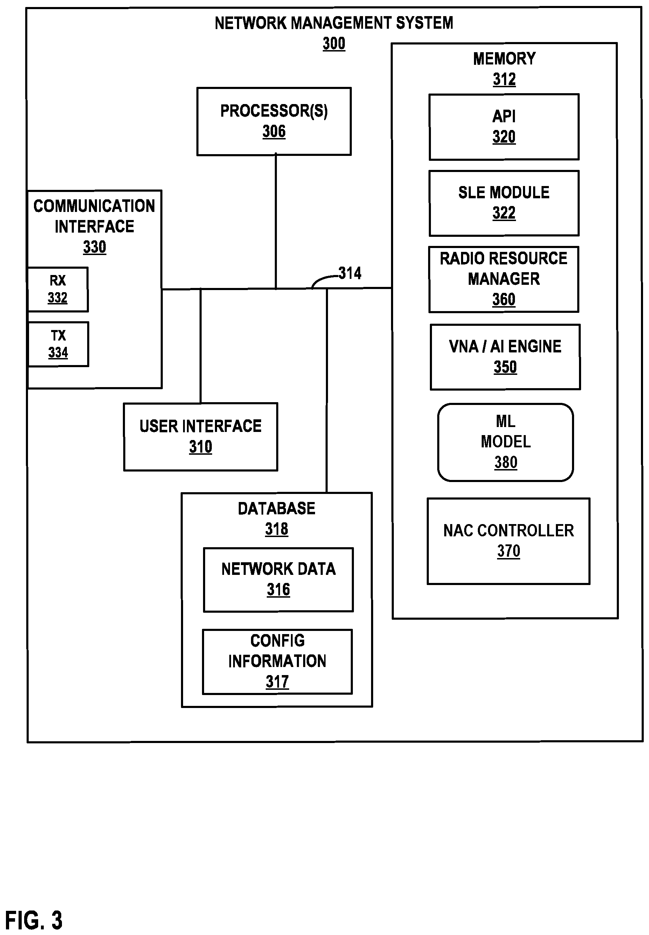

Vendor-specific attribute reporting unit 254 may respond to probe and other messages with responses including load and status indications. The load and status indications may be vendor-specific attributes (VSA). VSAs are typically defined by remote-access server vendors, usually hardware vendors, to customize how RADIUS works on their servers. Vendor specific attribute reporting unit 254 may provide load and status indications as defined by the remote-access server vendors and as stored by NAC monitoring unit 252. Vendor-specific attribute reporting unit 254 may alternately or in addition report load and status indications to NMS 300 shown in FIG. 3 and NMS 300 may forward the load and status indications to NAS devices.

The techniques of this disclosure provide one or more technical advantages and practical applications. For example, by storing and reporting load and status indications, NAC system 200 may enable NAS devices to perform authentication request load balancing based on latency tolerance.

FIG. 3 is a block diagram of an example network management system (NMS) 300, in accordance with one or more techniques of the disclosure. NMS 300 may be used to implement, for example, NMS 130 in FIGS. 1A, 1B. In such examples, NMS 300 is responsible for monitoring and management of one or more wireless networks 106A-106N at sites 102A-102N, respectively.

NMS 300 includes a communications interface 330, one or more processor(s) 306, a user interface 310, a memory 312, and a database 318. The various elements are coupled together via a bus 314 over which the various elements may exchange data and information. In some examples, NMS 300 receives data from one or more of client devices 148, APs 142, switches 146, routers, 147, edge devices 150, NAC systems 180, and other network nodes within network 134, e.g., routers and gateway devices, which may be used to calculate one or more SLE metrics and/or update network data 316 in database 318. NMS 300 analyzes this data for cloud-based management of wireless networks 106A-106N. In some examples, NMS 300 may be part of another server shown in FIG. 1A or a part of any other server.

Processor(s) 306 execute software instructions, such as those used to define a software or computer program, stored to a computer-readable storage medium (such as memory 312), such as non-transitory computer-readable mediums including a storage device (e.g., a disk drive, or an optical drive) or a memory (such as Flash memory or RAM) or any other type of volatile or non-volatile memory, that stores instructions to cause the one or more processors 306 to perform the techniques described herein. Such instructions may be received for execution and/or for storage (ready for later execution) using one or more communications interfaces.

Communications interface 330 may include, for example, an Ethernet interface. Communications interface 330 couples NMS 300 to a network and/or the Internet, such as any of network(s) 134 as shown in FIG. 1A, and/or any local area networks. Communications interface 330 includes a receiver 332 and a transmitter 334 by which NMS 300 receives/transmits data and information to/from any of client devices 148, APs 142, switches 146, routers 147, edge devices 150, NAC systems 180, servers 116, 122, 128 and/or any other network nodes, devices, or systems forming part of network system 100 such as shown in FIG. 1A. In some scenarios described herein in which network system 100 includes "third-party" network devices that are owned and/or associated with different entities than NMS 300, NMS 300 does not directly receive, collect, or otherwise have access to network data from the third-party network devices. In some examples, an edge device, such as edge devices 150 from FIGS. 1A, 1B, may provide a proxy through which the network data of the third-party network devices may be reported to NMS 300.

The data and information received by NMS 300 may include, for example, telemetry data, SLE-related data, or event data received from one or more of client device APs 148, APs 142, switches 146, routers 147, edge devices 150, NAC systems 180, or other network nodes, e.g., routers and gateway devices, used by NMS 300 to remotely monitor the performance of wireless networks 106A-106N and application sessions from client device to cloud-based application server. NMS 300 may further transmit data via communications interface 330 to any of the network devices, such as client devices 148, APs 142, switches 146, routers 147, edge devices 150, NAC systems 180, or other network nodes within network 134, to remotely manage wireless networks 106A-106N and portions of the wired network.

Memory 312 includes one or more devices configured to store programming modules and/or data associated with operation of NMS 300. For example, memory 312 may include a computer-readable storage medium, such as a non-transitory computer-readable medium including a storage device (e.g., a disk drive, or an optical drive) or a memory (such as Flash memory or RAM) or any other type of volatile or non-volatile memory, that stores instructions to cause the one or more processor(s) 306 to perform the techniques described herein.

In this example, memory 312 includes an API 320, an SLE module 322, a virtual network assistant (VNA)/AI engine 350, a radio resource management (RRM) engine 360, and a NAC controller 370. NMS 300 may also include any other programmed modules, software engines and/or interfaces configured for remote monitoring and management of wireless networks 106A-106N and portions of the wired network, including remote monitoring and management of any of APs 142, switches 146, routers 147, edge devices 150, NAC systems 180, or other network devices, e.g., routers and gateway devices.

SLE module 322 enables set up and tracking of thresholds for SLE metrics for each network 106A-106N. SLE module 322 further analyzes SLE-related data collected by, e.g., APs, such as any of APs 142 from UEs in each wireless network 106A-106N. For example, APs 142A-1through142A-N collect SLE-related data from UEs 148A-1 through 148A-N currently connected to wireless network 106A. This data is transmitted to NMS 300, which executes by SLE module 322 to determine one or more SLE metrics for each UE 148A-1 through 148A-N currently connected to wireless network 106A. This data, in addition to any network data collected by one or more APs 142A-1 through 142A-N in wireless network 106A, is transmitted to NMS 300 and stored as, for example, network data 316 in database 318.

RRM engine 360 monitors one or more metrics for each site 102A-102N in order to learn and optimize the RF environment at each site. For example, RRM engine 360 may monitor the coverage and capacity SLE metrics for a wireless network 106 at a site 102 in order to identify potential issues with SLE coverage and/or capacity in the wireless network 106 and to make adjustments to the radio settings of the access points at each site to address the identified issues. For example, RRM engine may determine channel and transmit power distribution across all APs 142 in each network 106A-106N. For example, RRM engine 360 may monitor events, power, channel, bandwidth, and number of clients connected to each AP. RRM engine 360 may further automatically change or update configurations of one or more APs 142 at a site 102 with an aim to improve the coverage and capacity SLE metrics and thus to provide an improved wireless experience for the user.

VNA/AI engine 350 analyzes data received from network devices as well as its own data to identify when undesired to abnormal states are encountered at one of the network devices. For example, VNA/AI engine 350 may identify the root cause of any undesired or abnormal states, e.g., any poor SLE metric(s) indicative of connected issues at one or more network devices. In addition, VNA/AI engine 350 may automatically invoke one or more corrective actions intended to address the identified root cause(s) of one or more poor SLE metrics. In some examples, ML model 380 may comprise a supervised ML model that is trained, using training data comprising pre-collected, labeled network data received from the network devices. The supervised ML model may comprise one of a logistical regression, naive Bayesian, support vector machine (SVM), or the like. In other examples, ML model 380 may comprise an unsupervised ML model. Although not shown in FIG. 3, in some examples, database 318 may store the training data and VNA/AI engine 350 or a dedicated training module may be configured to train ML model 380 based on the training data to determine appropriate weights across the one or more features of the training data.

Examples of corrective actions that may be automatically invoked by VNA/AI engine 350 may include, but are not limited to, invoking RRM 360 to reboot one or more APs, adjusting/modifying the transmit power of a specific radio in a specific AP, adding SSID configuration to a specific AP, changing channels on an AP or a set of APs, etc. The corrective actions may further include restarting a switch and/or a router, invoking downloading of new software to an AP, switch, or router, etc. These corrective actions are given for example purposes only, and the disclosure is not limited in this respect. If automatic corrective actions are not available or do not adequately resolve the root cause, VNA/AI engine 350 may proactively provide a notification including recommended corrective actions to be taken by IT personnel, e.g., a site or network administrator using admin device 111, to address the network error.

NAC controller 370 implements a NAC configuration platform that provides user interface 310 for display to an enterprise network administrator, e.g., via admin device 111 of FIG. 1A, through which to receive access policy information for the enterprise network. NAC controller 370 creates enterprise-specific configuration information 317 stored in database 318 based on the input received via user interface 310. Configuration information 317 may include NAC configuration information for one or more enterprise networks managed by NMS 300. For each enterprise, configuration information 317 may including access policies and associated policy assignment criteria. For example, configuration information 317 may define certain VLANs, ACLs, registration portals, or the like, associated with certain categories of client devices, and may further define, for each of the different categories of the client devices, different types of tracking, different types of authorization, and/or different levels of access privileges. Configuration information 317 may be substantially similar to configuration information 139 of FIG. 1B.

NAC controller 370 manages the data and information exchanged between NMS 300 and NAC systems 180, e.g., via RadSec tunnels or another encrypted tunnels 184, as shown in FIG. 1B. NAC controller 370 may maintain a log or mapping of which enterprise networks are served by which of NAC systems 180 and the corresponding configuration information 317 for those enterprises. NAC controller 370 may also manage any updates or modifications to configuration information 317 to be pushed down to NAC systems 180. In addition, NAC controller 370 may monitor NAC systems 180 to identify failures of primary NAC systems and manage failovers to standby NAC systems.

In accordance with one or more techniques of this disclosure, NMS 300 may poll or receive from the NAC systems 180A-180K load and status indications and provide the load and status indications to the NAS devices 108. NMS 300 may provide a configuration list of appropriate NAC systems 180A-180K to the NAS devices 108. NAS devices 108 may then use the configuration list for active load balancing or for fallback based on the configuration.

Although the techniques of the present disclosure are described in this example as performed by NMS 130, techniques described herein may be performed by any other computing device(s), system(s), and/or server(s), and that the disclosure is not limited in this respect. For example, one or more computing device(s) configured to execute the functionality of the techniques of this disclosure may reside in a dedicated server or be included in any other server in addition to or other than NMS 130, or may be distributed throughout network 100, and may or may not form a part of NMS 130.

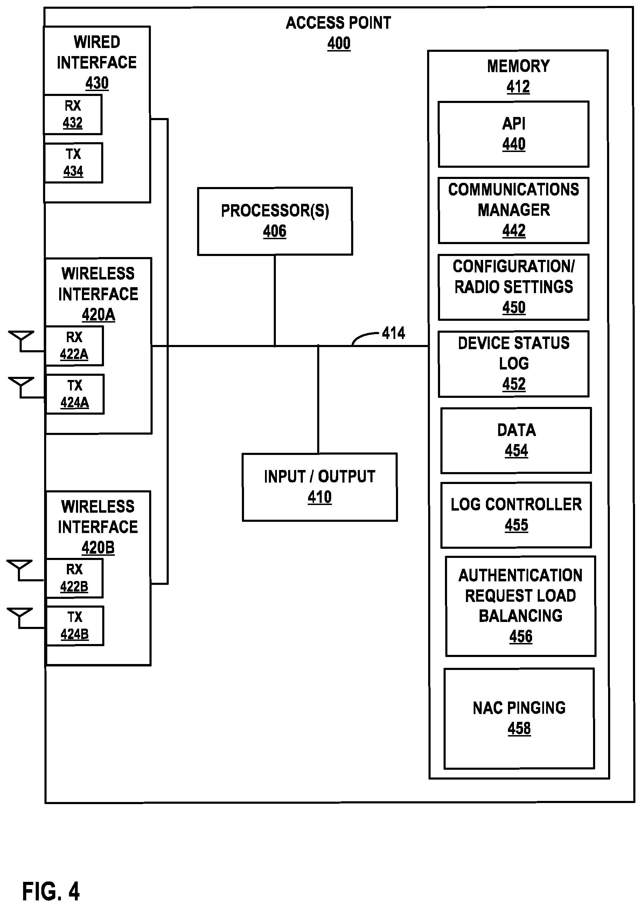

FIG. 4 is a block diagram of an example access point (AP) device 400, in accordance with one or more techniques of this disclosure. Example access point 400 shown in FIG. 4 may be used to implement any of APs 142 as shown and described herein with respect to FIG. 1A. Access point 400 may comprise, for example, a Wi-Fi, Bluetooth and/or Bluetooth Low Energy (BLE) base station or any other type of wireless access point.

In the example of FIG. 4, access point 400 includes a wired interface 430, wireless interfaces 420A-420B one or more processor(s) 406, memory 412, and input/output 410, coupled together via a bus 414 over which the various elements may exchange data and information. Wired interface 430 represents a physical network interface and includes a receiver 432 and a transmitter 434 for sending and receiving network communications, e.g., packets. Wired interface 430 couples, either directly or indirectly, access point 400 to a wired network device, such as one of switches 146 or routers 147 of FIGS. 1A, 1B, within the wired network via a cable, such as an Ethernet cable.

First and second wireless interfaces 420A and 420B represent wireless network interfaces and include receivers 422A and 422B, respectively, each including a receive antenna via which access point 400 may receive wireless signals from wireless communications devices, such as UEs 148 of FIGS. 1A, 1B. First and second wireless interfaces 420A and 420B further include transmitters 424A and 424B, respectively, each including transmit antennas via which access point 400 may transmit wireless signals to wireless communications devices, such as UEs 148 of FIGS. 1A, 1B. In some examples, first wireless interface 420A may include a Wi-Fi 802.11 interface (e.g., 2.4 GHz and/or 5 GHz) and second wireless interface 420B may include a Bluetooth interface and/or a Bluetooth Low Energy (BLE) interface. As described above, AP 400 may request network access for one or more UEs 148 from a nearby NAC system, e.g., NAC system 200 of FIG. 2 or one of NAC systems 180 of FIGS. 1A, 1B.

Processor(s) 406 are programmable hardware-based processors configured to execute software instructions, such as those used to define a software or computer program, stored to a computer-readable storage medium (such as memory 412), such as non-transitory computer-readable mediums including a storage device (e.g., a disk drive, or an optical drive) or a memory (such as Flash memory or RAM) or any other type of volatile or non-volatile memory, that stores instructions to cause the one or more processors 406 to perform the techniques described herein. Such instructions may be received for execution and/or for storage (ready for later execution) using one or more communications interfaces.

Memory 412 includes one or more devices configured to store programming modules and/or data associated with operation of access point 400. For example, memory 412 may include a computer-readable storage medium, such as non-transitory computer-readable mediums including a storage device (e.g., a disk drive, or an optical drive) or a memory (such as Flash memory or RAM) or any other type of volatile or non-volatile memory, that stores instructions to cause the one or more processor(s) 406 to perform the techniques described herein.

In this example, memory 412 stores executable software including an application programming interface (API) 440, a communications manager 442, configuration settings 450, a device status log 452, data storage 454, log controller 455, authentication request load balancing 456 and NAC pinging unit 458. Device status log 452 includes a list of events specific to access point 400. The events may include a log of both normal events and error events such as, for example, memory status, reboot or restart events, crash events, cloud disconnect with self-recovery events, low link speed or link speed flapping events, Ethernet port status, Ethernet interface packet errors, upgrade failure events, firmware upgrade events, configuration changes, etc., as well as a time and date stamp for each event. Log controller 455 determines a logging level for the device based on instructions from NMS 130. Data 454 may store any data used and/or generated by access point 400, including data collected from UEs 148, such as data used to calculate one or more SLE metrics, that is transmitted by access point 400 for cloud-based management of wireless networks 106A by NMS 130/300.

Input/output (I/O) 410 represents physical hardware components that enable interaction with a user, such as buttons, a display, and the like. Although not shown, memory 412 typically stores executable software for controlling a user interface with respect to input received via I/O 410. Communications manager 442 includes program code that, when executed by processor(s) 406, allow access point 400 to communicate with UEs 148 and/or network(s) 134 via any of interface(s) 430 and/or 420A-420C. Configuration settings 450 include any device settings for access point 400 such as radio settings for each of wireless interface(s) 420A-420C. These settings may be configured manually or may be remotely monitored and managed by NMS 130 to optimize wireless network performance on a periodic (e.g., hourly or daily) basis.

As described herein, AP device 400 may measure and report network data from status log 452 to NMS 130. The network data may comprise event data, telemetry data, and/or other SLE-related data. The network data may include various parameters indicative of the performance and/or status of the wireless network. The parameters may be measured and/or determined by one or more of the UE devices and/or by one or more of the APs in a wireless network. NMS 130/300 may determine one or more SLE metrics based on the SLE-related data received from the APs in the wireless network and store the SLE metrics as network data 137 (FIG. 1B).

AP device 400 may act as a NAS device as discussed above with respect to FIG. 1. NMS 130 may initiate a firmware upgrade to enable AP device 400 to do latency tolerance-based authorization request load balancing. NAC pinging unit 458 may send probe messages to NAC systems 180 of FIGS. 1A, 1B. The probe messages may include requests for load and status indications from the NAC systems. The load indications may indicate the load, such as a percentage of capacity, at NAC systems 180. The status indications may indicate server status such as lack of connection to identity provider (IDP) or other failure conditions. The load and status indications may be vendor-specific attributes. NAC pinging unit 458 may also store the load and status indications from NAC systems 180.

NAC pinging unit 458 may also determine and store latency information for NAC systems 180 by tracking the latency of responses to probe and other messages from NAC systems 180. In this way, AP device 400 may determine a lowest latency NAC system with respect to a given AP device 400.

Authorization request load balancing unit 456 may do authorization request load balancing based on the latency tolerance of the particular authorization request and a current latency of NAC systems 180. Authorization request load balancing unit 456 may analyze authentication requests to determine a type related to the latency tolerance of the authentication requests. For example, authorization request load balancing unit 456 may associate an initial authentication requests with a lower tolerance for latency, and associate re-authentication requests with a higher tolerance for latency. Authorization request load balancing unit 456 may also associate multi-transaction authentication requests with a lower tolerance for latency and single-transaction authentication requests with a higher tolerance for latency.

Once the load at the local NAC system raises above a threshold, authorization request load balancing unit 456 may start performing load balancing based on latency tolerance of the authentication request types. For example, authorization request load balancing unit 456 may send re-authentication requests and initial authentication requests that are single transaction requests to a higher latency NAC system and initial authentication requests that are multiple transaction to the low latency NAC system.

The techniques of this disclosure provide one or more technical advantages and practical applications. The load balancing by AP device 400 make it possible to distribute authentication requests to NAC systems 180 in a way that may still accommodate latency-sensitive requests, such as initial authentication requests, with minimal delay even during peak usage periods for the local NAC system. The performance of client devices 148 is enhanced by ensuring that client devices making initial authentication requests have access to the lowest latency NAC system thus speeding up the authentication process and allowing such client devices to access the network faster, which ultimately leads to a better user experience. Further, these techniques may also help conserve resources and cut costs by reducing the need to expand the capacity of NAC systems 180 during high-usage periods.

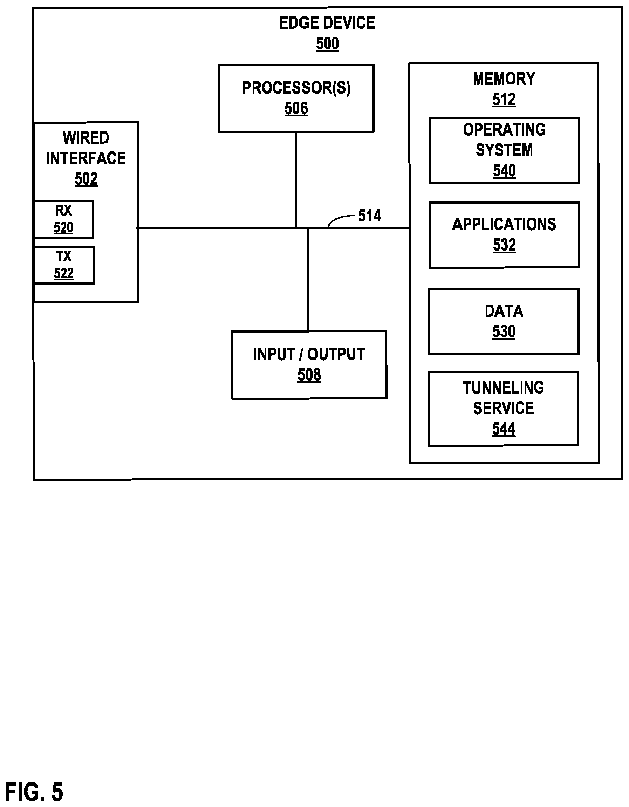

FIG. 5 is a block diagram illustrating an example edge device 500, in accordance with one or more techniques of this disclosure. Edge device 500 comprises a cloud-managed, wireless local area network (LAN) controller. Edge device 500 may be used to implement, for example, any of edge devices 150 in FIGS. 1A, 1B. In such examples, edge device 500 comprises an on-premises device at a site 102 that is in communication with NMS 130 and one or more on-premises NAS devices 108, e.g., one or more APs 142, switches 146, or routers 147, from FIGS. 1A, 1B. Edge device 500 with NMS 130 and may operate to extend certain microservices from NMS 130 to the on-premises NAS devices 108 while using NMS 130 and its distributed software architecture for scalable and resilient operations, management, troubleshooting, and analytics.

In this example, edge device 500 includes a wired interface 502, e.g., an Ethernet interface, a processor 506, input/output 508, e.g., display, buttons, keyboard, keypad, touch screen, mouse, etc., and a memory 512 coupled together via a bus 514 over which the various elements may interchange data and information. Wired interface 502 couples edge device 500 to a network, such as network 134 shown in FIG. 1A and/or any local area networks. Wired interface 502 includes a receiver 520 and a transmitter 522 by which edge device 500 receives/transmits data and information to/from any of NAS devices 108 and NMS 130 and/or NAC systems 180. Though only one interface is shown by way of example, edge device 500 may have multiple communication interfaces and/or multiple communication interface ports.

Memory 512 stores executable software applications 532 (which may be received for execution and/or for storage (ready for later execution) using one or more communications interfaces), operating system 540 and data/information 530. Data 530 may include a system log and/or an error log that stores event data, including behavior data, for edge device 500. Tunneling service 544 provides on-premises tunnel termination from APs and other NAS devices. Tunneling service 544 further provides a secure tunnel proxy to NMS 130 and/or NAC systems 180. In one scenario, one or more of the NAS devices 108, e.g., switch 146A from FIG. 1B, may not support establishment of RadSec tunnels directly with NMS 130 and/or NAC systems 180. In this scenario, tunneling service 544 of edge device 500 provides a RadSec proxy to enable RADIUS packets received from switch 146A via a RADIUS tunnel 178A to be tunneled to NAC system 180A using a RadSec tunnel 182A, as shown in FIG. 1B.

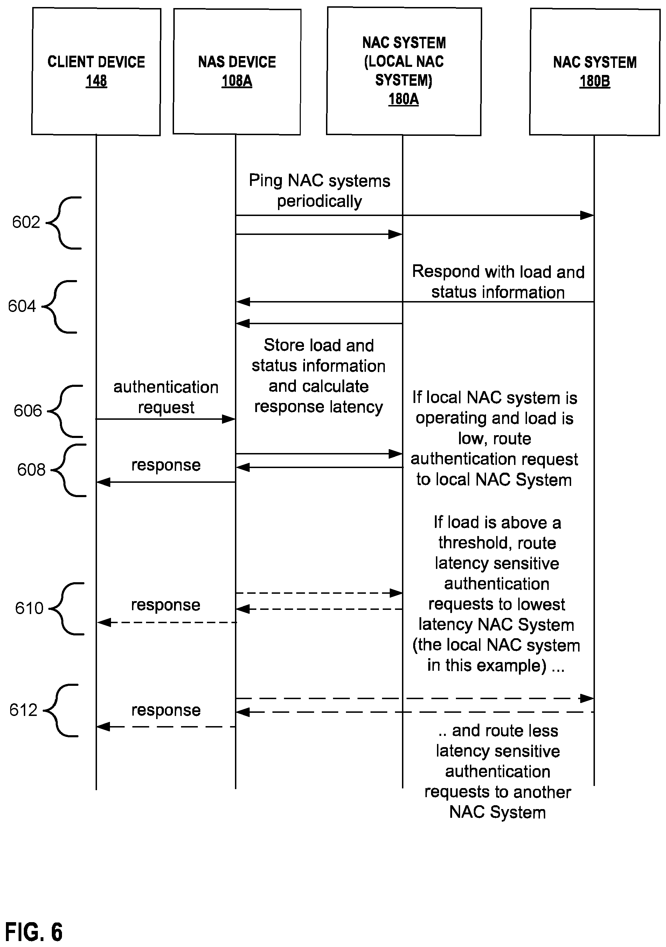

FIG. 6 is a conceptual diagram illustrating an example communication flow, in accordance with one or more techniques of this disclosure. NAS device 108A periodically pings or probes the NAC systems 180 (602). In this example, two NAC systems, NAC system 180A and NAC system 180B are shown but more NAC systems may be used. NAC system 180A and 180B respond to the ping or probes with load and status indications (604). The load and status indications may be VSA fields in responses from the NAC systems 180. NAS device 108A may also calculate response latencies for each of NAC system 180A and 180B. As discussed below, NAS device 108A may use the load and status indications as well the latencies to initiate and perform load balancing of authentication requests.

In this example, NAC system 180A is a local NAC system for NAS device 108A. For example, NAC system 180A may be within a same geographic location as NAS device 108A. NAS device 108A may have connectivity to NAC system 180B but NAC system 180B may be located in a different geographic location as NAS device 108A. For example, NAS device 108A and NAC system 180A may both be located in the US East geographic region while NAC system 180B may be located in the US West geographic region.

NAS device 108A receives an authorization request (606) from client device 148. NAS device 108A may then determine a type of the authentication request with respect to latency tolerance. For example, NAS device 108A may associate an initial authentication requests with a lower tolerance for latency, and associate re-authentication requests with a higher tolerance for latency. NAS device 108A may associate multi-transaction authentication requests with a lower tolerance for latency and single-transaction authentication requests with a higher tolerance for latency. For purposes of the example of FIG. 6, local NAC system 108A has a lower latency with respect to NAS device 108A than NAC system 108B.

If local NAC system 108A is operational and the load is low, NAS device 108A may route all of the authentication requests to local NAC system 180A (608). If the load at NAC system 180A is above a threshold, NAS device 108A may route latency sensitive authentication requests to the lowest latency NAC system (610) (NAC system 108A in this example) and route less latency sensitive authentication requests to another NAC system (612) (NAC system 180B which in this example has a higher latency). For example, NAC system 108A may send re-authentication requests and initial authentication requests that are single transaction requests to NAC system 180B and initial authentication requests that are multiple transaction requests to NAC system 180A.

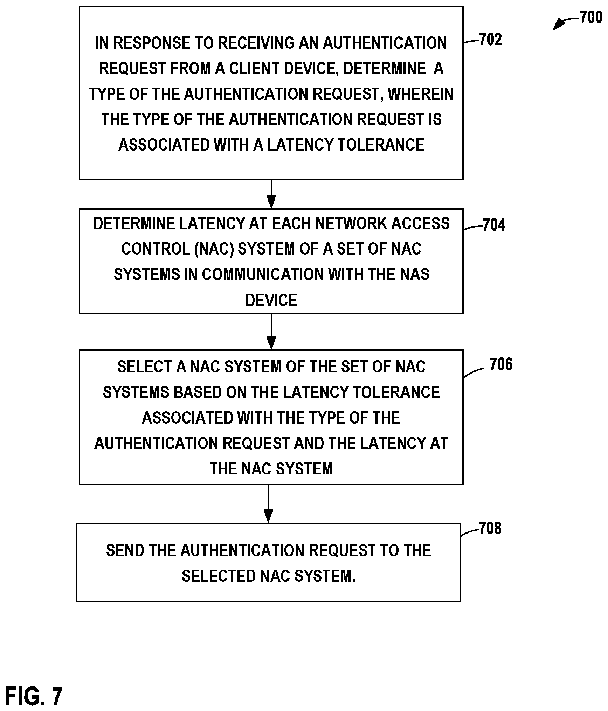

FIG. 7 is a flow chart illustrating an example operation for the dynamic load balancing of authentication requests from a network access server device to network access control system, in accordance with one or more techniques of this disclosure. The example operation of FIG. 7 is described herein with respect to NAS device 108A, client device 148 and NAC systems 180 of FIGS. 1A-B. In other examples, the operation of FIG. 7 may be performed by other computing systems or devices.

NAS device 108A, in response to receiving an authentication request from a client device 148, may determine a type of the authentication request, wherein the type of the authentication request is associated with a latency tolerance (702). For example, the type of authentication request may include whether the authentication request is an initial authentication request or a re-authentication request. The type of authentication request may also include whether the authentication request is a single transaction authentication or a multi-transaction authentication. Initial authentication requests may have a lower latency tolerance than re-authentication requests. Multi-transaction authentication requests may have a lower latency tolerance than single transaction authentication requests.

NAS device 108A may determine latency at each NAC system of a set of NAC systems in communication with the NAS device 108A (704). NAS device 108A may determine latency by measuring response times to probes or other messages from NAS device 108A.

NAS device 108A may select a NAC system of the set of NAC systems 180 based on the latency tolerance associated with the type of the authentication request and the latency at NAC system (706). For example, once a local NAC system becomes sufficiently loaded, NAS device 108A performs load balancing for the incoming authentication request to may select from among the set of NAC systems 180 such that a higher latency NAC system may be selected for latency tolerant authentication requests, e.g., re-authentication requests and initial authentication requests that are single transaction requests, and a lower latency NAC system may be selected for initial authentication requests that are multiple transaction requests. NAS Device 108A may then send the authentication request to the selected NAC system (708).

Therefore, from one perspective, there has been described a network access server (NAS) device that is configured to load balance authentication requests to network access control (NAC) systems based on a type of the authentication request. The NAS device may probe or ping one or more geographically distributed NAC systems to determine response latency and to receive load and status indications from the NAC systems. In response to receipt of an authentication request from a client device, the NAS device may select one NAC system from among the one or more NAC systems based on the load and status indications of the NAC systems and the type of authentication request received.

The techniques described herein may be implemented in hardware, software, firmware, or any combination thereof. Various features described as modules, units or components may be implemented together in an integrated logic device or separately as discrete but interoperable logic devices or other hardware devices. In some cases, various features of electronic circuitry may be implemented as one or more integrated circuit devices, such as an integrated circuit chip or chipset.

If implemented in hardware, this disclosure may be directed to an apparatus such as a processor or an integrated circuit device, such as an integrated circuit chip or chipset. Alternatively or additionally, if implemented in software or firmware, the techniques may be realized at least in part by a computer readable medium comprising instructions that, when executed, cause a processor to perform one or more of the methods described above. For example, a computer-readable medium may include a computer-readable data storage medium and/or a computer readable data transmission medium. A computer-readable data storage medium may store such instructions for execution by a processor. A computer-readable data transmission medium may convey instructions for execution by a processor (whether such conveying is direct to the processor or to a storage medium that stores the instructions for later execution).

A computer-readable medium may form part of a computer program product, which may include packaging materials. A computer-readable medium may comprise a computer data storage medium such as random access memory (RAM), read-only memory (ROM), non-volatile random access memory (NVRAM), electrically erasable programmable read-only memory (EEPROM), Flash memory, magnetic or optical data storage media, and the like. In some examples, an article of manufacture may comprise one or more computer-readable storage media.

In some examples, the computer-readable storage media may comprise non-transitory media. The term "non-transitory" may indicate that the storage medium is not embodied in a carrier wave or a propagated signal. In certain examples, a non-transitory storage medium may store data that can, over time, change (e.g., in RAM or cache). In some examples the computer-readable data transmission medium may include carrier waves, transmission signals or the like. A computer-readable transmission medium may convey instructions between components of a single computer system and/or between plural separate computer systems

The code or instructions may be software and/or firmware executed by processing circuitry including one or more processors, such as one or more digital signal processors (DSPs), general purpose microprocessors, application-specific integrated circuits (ASICs), field-programmable gate arrays (FPGAs), or other equivalent integrated or discrete logic circuitry. Accordingly, the term "processor," as used herein may refer to any of the foregoing structure or any other structure suitable for implementation of the techniques described herein. In addition, in some aspects, functionality described in this disclosure may be provided within software modules or hardware modules.

## Claims

1. A network access server, NAS, device comprising:
a memory; and
one or more processors in communication with the memory and configured to:
in response to receipt of an authentication request from a client device, determine a type of the authentication request, the type of authentication request comprising an initial authentication request or a re-authentication request, wherein the initial authentication request is associated with a low tolerance for latency, and wherein the re-authentication request is associated with a high tolerance for latency;
determine latency at each network access control, NAC, system of a set of NAC systems in communication with the NAS device;
select a NAC system of the set of NAC systems based on the latency tolerance associated with the type of the authentication request and the latency at the NAC system; and
send the authentication request to the selected NAC system.

2. The NAS device of claim 1, wherein to select the NAC system for the authentication request, the one or more processors are configured to, in response to determining that the authentication request comprises the re-authentication request, select the NAC system that has a higher latency than one or more of the other NAC systems in the set of NAC systems.

3. The NAS device of claim 1, wherein to select the NAC system for the authentication request, the one or more processors are configured to, in response to determining that the authentication request comprises the initial authentication request, select the NAC system that has a lower latency than the other NAC systems in the set of NAC systems.

4. The NAS device of claim 1, wherein to determine the type of authentication request, the one or more processors are configured to, in response to determining that the authentication request comprises the initial authentication request, determine whether the authentication request comprises a single transaction authentication or a multi-transaction authentication, wherein the single transaction authentication is associated with a high tolerance for latency, and wherein the multi-transaction authentication is associated with a low tolerance for latency.

5. The NAS device of claim 4, wherein to select the NAC system for the authentication request, the one or more processors are configured to, in response to determining that the authentication request comprises the initial authentication request and that the authentication request comprises the single transaction authentication, select the NAC system that has a higher latency than one or more of the other NAC systems in the set of NAC systems.

6. The NAS device of claim 4, wherein to select the NAC system for the authentication request, the one or more processors are configured to, in response to determining that the authentication request comprises the initial authentication request and that the authentication request comprises the multi-transaction authentication, select the NAC system that has a lower latency than the other NAC systems in the set of NAC systems.

7. The NAS device of any of claims 1-6, wherein one of the set of NAC systems is a local NAC system to the NAS device, and wherein the one or more processors are configured to:
receive a load indication from the local NAC system; and
determine that the load at the local NAC system is above a threshold.

8. The NAS device of any of claims 1-7, wherein one of the set of NAC systems is a local NAC system to the NAS device, and wherein the one or more processors are configured to:
receive a status indication from the local NAC system; and
determine that the local NAC system is available to receive authentication requests.

9. The NAS device of any of claims 1-8, wherein the one or more processors are configured to:
send, to each NAC system in the set of NAC systems, a probe message; and
in response to the probe message, receive, from each NAC system in the set of NAC systems, a message including a status indication and a load indication for the NAC system.

10. The NAS device of claim 9, wherein the message comprises one or more vendor-specific attributes based on a vendor of the NAS device.

11. A system comprising:
a network access server, NAS, device as recited by any of claims 1-10; and
a set of network access control, NAC, systems in communication with the NAS device.

12. A method as performed by a network access server, NAS, device as recited by any of claims 1-10.

13. A computer-readable medium comprising instructions that, when executed, cause one or more processors to become configured to perform a method as performed by a network access server, NAS, device as recited by any of claims 1-10.

## Patentansprüche

1. Netzwerkzugriffsserver-Vorrichtung, NAS-Vorrichtung, umfassend:
einen Speicher; und
einen oder mehrere Prozessoren, die mit dem Speicher in Kommunikation stehen und zu Folgendem konfiguriert sind:
als Reaktion auf den Empfang einer Authentifizierungsanforderung von einer Client-Vorrichtung, Bestimmen eines Typs der Authentifizierungsanforderung, wobei der Typ der Authentifizierungsanforderung eine Erstauthentifizierungsanforderung oder eine Neuauthentifizierungsanforderung umfasst, wobei die Erstauthentifizierungsanforderung mit einer niedrigen Latenztoleranz verknüpft ist und wobei die Neuauthentifizierungsanforderung mit einer hohen Latenztoleranz verbunden ist;
Bestimmen der Latenz an jedem Netzwerkzugriffskontrollsystem, NAC-System, einer Menge von NAC-Systemen in Kommunikation mit der NAS-Vorrichtung;
Auswählen eines NAC-System der Menge von NAC-Systemen basierend auf der Latenztoleranz, die mit dem Typ der Authentifizierungsanforderung und der Latenz des NAC-Systems verknüpft ist; und
Senden der Authentifizierungsanforderung an das ausgewählte NAC-System.

2. NAS-Vorrichtung nach Anspruch 1, wobei zum Auswählen des NAC-Systems für die Authentifizierungsanforderung der eine oder die mehreren Prozessor(en) dazu konfiguriert sind, in Reaktion auf die Bestimmung, dass die Authentifizierungsanforderung die Neuauthentifizierungsanforderung umfasst, das NAC-System auszuwählen, das eine höhere Latenz als eines oder mehrere der anderen NAC-Systeme in der Menge von NAC-Systemen hat.

3. NAS-Vorrichtung nach Anspruch 1, wobei zum Auswählen des NAC-Systems für die Authentifizierungsanforderung der eine oder die mehreren Prozessor(en) dazu konfiguriert sind, in Reaktion auf die Bestimmung, dass die Authentifizierungsanforderung die Erstauthentifizierungsanforderung umfasst, das NAC-System auszuwählen, das eine niedrigere Latenz als die anderen NAC-Systeme in der Menge von NAC-Systemen hat.

4. NAS-Vorrichtung nach Anspruch 1, wobei zum Bestimmen des Typs der Authentifizierungsanforderung der eine oder die mehreren Prozessor(en) dazu konfiguriert sind, als Reaktion auf die Bestimmung, dass die Authentifizierungsanforderung die Erstauthentifizierungsanforderung umfasst, zu bestimmen, ob die Authentifizierungsanforderung eine Einzeltransaktionsauthentifizierung oder eine Mehrfachtransaktionsauthentifizierung umfasst, wobei die Einzeltransaktionsauthentifizierung mit einer hohen Toleranz für die Latenz verknüpft ist, und wobei die Mehrfachtransaktionsauthentifizierung mit einer niedrigen Toleranz für die Latenz verknüpft ist.

5. NAS-Vorrichtung nach Anspruch 4, wobei zum Auswählen des NAC-Systems für die Authentifizierungsanforderung der eine oder die mehreren Prozessor(en) dazu konfiguriert sind, in Reaktion auf die Bestimmung, dass die Authentifizierungsanforderung die Erstauthentifizierungsanforderung umfasst und dass die Authentifizierungsanforderung die Einzeltransaktionsauthentifizierung umfasst, das NAC-System auszuwählen, das eine höhere Latenz als eines oder mehrere der anderen NAC-Systeme in der Menge von NAC-Systemen aufweist.

6. NAS-Vorrichtung nach Anspruch 4, wobei zum Auswählen des NAC-Systems für die Authentifizierungsanforderung der eine oder die mehreren Prozessor(en) dazu konfiguriert sind, in Reaktion auf die Bestimmung, dass die Authentifizierungsanforderung die Erstauthentifizierungsanforderung umfasst und dass die Authentifizierungsanforderung die Mehrfachtransaktionsauthentifizierung umfasst, das NAC-System auszuwählen, das eine niedrigere Latenz als die anderen NAC-Systeme in der Menge von NAC-Systemen hat.

7. NAS-Vorrichtung nach einem der Ansprüche 1-6, wobei eines der Menge von NAC-Systemen ein lokales NAC-System zur NAS-Vorrichtung ist und wobei der eine oder die mehreren Prozessor(en) konfiguriert sind zum:
Empfangen einer Lastanzeige vom lokalen NAC-System; und
Bestimmen, dass die Last am lokalen NAC-System über einem Schwellwert liegt.

8. NAS-Vorrichtung nach einem der Ansprüche 1-7, wobei eines der Menge von NAC-Systemen ein lokales NAC-System zur NAS-Vorrichtung ist und wobei der eine oder die mehreren Prozessor(en) konfiguriert sind zum:
Empfangen einer Statusanzeige vom lokalen NAC-System; und
Bestimmen, dass das lokale NAC-System verfügbar ist, um Authentifizierungsanforderungen zu empfangen.

9. NAS-Vorrichtung nach einem der Ansprüche 1-8, wobei der eine oder die mehreren Prozessor(en) konfiguriert sind zum:
Senden, an jedes NAC-System in der Menge von NAC-Systemen, einer Sondierungsnachricht; und
als Reaktion auf die Sondierungsnachricht, Empfangen, von jedem NAC-System in der Menge von NAC-Systemen, einer Nachricht mit einer Statusanzeige und einer Lastanzeige für das NAC-System.

10. NAS-Vorrichtung nach Anspruch 9, wobei die Nachricht ein oder mehrere herstellerspezifische Attribute umfasst, basierend auf einem Hersteller der NAS-Vorrichtung.

11. System, umfassend:
eine Netzwerkzugriffsserver-Vorrichtung, NAS-Vorrichtung, nach einem der Ansprüche 1-10; und
eine Menge von Netzwerkzugriffskontrollsystemen, NAC-Systemen, in Kommunikation mit der NAS-Vorrichtung.

12. Verfahren, das durch eine Netzwerkzugriffsserver-Vorrichtung, NAS-Vorrichtung, nach einem der Ansprüche 1-10 durchgeführt wird.

13. Computerlesbares Medium, das Anweisungen umfasst, die bei Ausführung bewirken, dass ein oder mehrere Prozessor(en) dazu konfiguriert werden, ein Verfahren durchzuführen, wie es durch eine Netzwerkzugriffsserver-Vorrichtung, NAS-Vorrichtung, nach einem der Ansprüche 1-10 durchgeführt wird.

## Revendications

1. Dispositif de serveur d'accès au réseau, NAS, comprenant :
une mémoire ; et
un ou plusieurs processeurs en communication avec la mémoire et configurés pour :
en réponse à la réception d'une demande d'authentification provenant d'un dispositif client, déterminer un type de la demande d'authentification, le type de demande d'authentification comprenant une demande d'authentification initiale ou une demande de ré-authentification, la demande d'authentification initiale étant associée à une faible tolérance de latence, et la demande de ré-authentification étant associée à une tolérance élevée de latence ;
déterminer la latence au niveau de chaque système de contrôle d'accès au réseau, NAC, d'un ensemble de systèmes NAC en communication avec le dispositif NAS ;
sélectionner un système NAC de l'ensemble de systèmes NAC sur la base de la tolérance de latence associée au type de la demande d'authentification et de la latence au niveau du système NAC ; et
envoyer la demande d'authentification au système NAC sélectionné.

2. Dispositif NAS selon la revendication 1, dans lequel pour sélectionner le système NAC pour la demande d'authentification, le ou les processeurs sont configurés pour, en réponse à la détermination que la demande d'authentification comprend la demande de ré-authentification, sélectionner le système NAC qui a une latence plus élevée que l'un ou plusieurs des autres systèmes NAC dans l'ensemble de systèmes NAC.

3. Dispositif NAS selon la revendication 1, dans lequel pour sélectionner le système NAC pour la demande d'authentification, le ou les processeurs sont configurés pour, en réponse à la détermination que la demande d'authentification comprend la demande d'authentification initiale, sélectionner le système NAC qui a une latence plus faible que les autres systèmes NAC dans l'ensemble de systèmes NAC.

4. Dispositif NAS selon la revendication 1, dans lequel pour déterminer le type de demande d'authentification, le ou les processeurs sont configurés pour, en réponse à la détermination que la demande d'authentification comprend la demande d'authentification initiale, déterminer si la demande d'authentification comprend une authentification de transaction unique ou une authentification multi-transaction, l'authentification de transaction unique étant associée à une tolérance élevée pour la latence, et l'authentification multi-transaction étant associée à une tolérance faible pour la latence.

5. Dispositif NAS selon la revendication 4, dans lequel pour sélectionner le système NAC pour la demande d'authentification, le ou les processeurs sont configurés pour, en réponse à la détermination que la demande d'authentification comprend la demande d'authentification initiale et que la demande d'authentification comprend l'authentification de transaction unique, sélectionner le système NAC qui a une latence plus élevée que l'un ou plusieurs des autres systèmes NAC dans l'ensemble de systèmes NAC.

6. Dispositif NAS selon la revendication 4, dans lequel pour sélectionner le système NAC pour la demande d'authentification, le ou les processeurs sont configurés pour, en réponse à la détermination que la demande d'authentification comprend la demande d'authentification initiale et que la demande d'authentification comprend l'authentification multi-transaction, sélectionner le système NAC qui a une latence plus faible que les autres systèmes NAC dans l'ensemble de systèmes NAC.

7. Dispositif NAS selon l'une quelconque des revendications 1 à 6, dans lequel l'un de l'ensemble de systèmes NAC est un système NAC local au dispositif NAS, et le ou les processeurs étant configurés pour :
recevoir une indication de charge du système NAC local ; et
déterminer que la charge au niveau du système NAC local est supérieure à un seuil.

8. Dispositif NAS selon l'une quelconque des revendications 1 à 7, dans lequel l'un de l'ensemble de systèmes NAC est un système NAC local au dispositif NAS, et le ou les processeurs étant configurés pour :
recevoir une indication d'état du système NAC local ; et
déterminer que le système NAC local est disponible pour recevoir les demandes d'authentification.

9. Dispositif NAS selon l'une quelconque des revendications 1 à 8, le ou les processeurs étant configurés pour :
envoyer, à chaque système NAC de l'ensemble des systèmes NAC, un message de sonde ; et
en réponse au message de sonde, recevoir, de chaque système NAC de l'ensemble des systèmes NAC, un message comprenant une indication d'état et une indication de charge pour le système NAC.

10. Dispositif NAS selon la revendication 9, dans lequel le message comprend un ou plusieurs attributs spécifiques au vendeur sur la base d'un vendeur du dispositif NAS.

11. Système comprenant :
un dispositif de serveur d'accès au réseau, NAS, selon l'une quelconque des revendications 1 à 10 ; et
un ensemble de systèmes de contrôle d'accès au réseau, NAC, en communication avec le dispositif NAS.

12. Procédé selon l'une quelconque des revendications 1 à 10, mis en œuvre par un dispositif de serveur d'accès au réseau, NAS.

13. Support lisible par ordinateur comprenant des instructions qui, lorsqu'elles sont exécutées, amènent un ou plusieurs processeurs à devenir configurés pour mettre en œuvre un procédé tel que mis en œuvre par un dispositif de serveur d'accès au réseau, NAS, selon l'une quelconque des revendications 1 à 10.
